# EUROPÄISCHE PATENTSCHRIFT

(11) **EP 2 094 532 B1**
(45) Veröffentlichungstag und Bekanntmachung des Hinweises auf die Patenterteilung: **16.10.2013**
(21) Anmeldenummer: 07819106.1
(22) Anmeldetag: 18.10.2007
(51) Int. Cl.: B60R 13/02

(54) **TÜRVERKLEIDUNG, INSBESONDERE FÜR EIN KRAFTFAHRZEUG, UND FERTIGUNGSVERFAHREN**
DOOR LINING, ESPECIALLY FOR A MOTOR VEHICLE, AND PRODUCTION METHOD
HABILLAGE DE PORTIÈRE, NOTAMMENT POUR VÉHICULE AUTOMOBILE, ET PROCÉDÉ DE PRODUCTION

(30) Priorität: 20.10.2006 DE 102006050474; 29.03.2007 DE 102007015600
(43) Veröffentlichungstag der Anmeldung: 02.09.2009
(73) Patentinhaber: Johnson Controls Interiors GmbH & Co. KG, 47929 Grefrath (DE)
(72) Erfinder: BRENDEL, Bernd, 47906 Kempen (DE); MEYER, Thorsten, 47798 Krefeld (DE)
(74) Vertreter: Wolff, Felix
(86) Internationale Anmeldenummer: PCT/EP2007/009041
(87) Internationale Veröffentlichungsnummer: WO 2008/046618

(56) Entgegenhaltungen:
- EP-A- 0 737 602
- DE-U1- 9 219 007
- DE-U1- 20 006 192
- DE-U1- 20 122 399
- US-A- 5 298 694

## Beschreibung

Die vorliegende Erfindung betrifft ein Verfahren zur Herstellung eines Trennmittels.

Ein Trennmittel ist beispielsweise aus der DE 103 26 154 A1, der US 6, 197, 403 B1, der DE 35 10 018 C2, sowie der G 82 25 069 bekannt. Die in den Druckschriften beschriebene Fahrzeugtür ist innenraumseitig mit einer Türverkleidung versehen, wobei das von äußerem Türblech und Türverkleidung umschlossene Volumen mittels eines Trennmittels in einen äußeren Nassraum und einen inneren Trockenraum unterteilt ist. Aus der DE 200 06 192 U1 ist ebenfalls ein Trennmittel bekannt.

Es war die Aufgabe der vorliegenden Erfindung ein Verfahren zur Herstellung eines Trennmittels zur Verfügung zu stellen.

Gelöst wird die Aufgabe mit einem Verfahren nach Anspruch 1.

Es war für den Fachmann überaus erstaunlich und nicht zu erwarten, dass sich mit dem Trennmittel verbesserte akustische Absorptionseigenschaften erzielen lassen. Dadurch wird die Geräuschbelastung im Fahrzeuginneren deutlich reduziert, was den Fahrkomfort den Fahrzeuginsassen erhöht.

Das Trennmittel weist ein Absorbervlies mit einem Grundvlies aus Kunststofffasern auf. Vorzugsweise handelt es sich bei den Kunststofffasern um Polyesterfasern und/oder Polypropylenfasern. Besonders bevorzugt beträgt das Gewichtsverhältnis zwischen Polyesterfasern und Polypropylenfasern von 25:75 bis 35:55, besonders bevorzugt jedoch 30:70.

Vorzugsweise hat das Grundvlies ein Flächengewicht von 150 bis 500 Gramm/m², ganz besonders bevorzugt 170 bis 220 Gramm/m².

Vorzugsweise weist das Grundvlies eine Dicke von 5 bis 30 vorzugsweise 7 bis 20 mm auf.

Die erfindungsgemäß ebenfalls vorhandene Trennfolie ist vorzugsweise aus Polyolefin besonders bevorzugt aus Polypropylen gefertigt. Vorzugsweise weist die Folie eine Dicke zwischen 0,1 und 4 mm vorzugsweise 1 bis 2 mm auf.

Vorzugsweise weist das erfindungsgemäße Trennmittel zusätzlich ein Deckvlies auf. Das Deckvlies besteht vorzugsweise im wesentlichen, ganz besonders bevorzugt vollständig aus Polypropylen (PP) um die Haftung zu dem PP-Träger zu verbessern. Eine Funktion des Deckvlieses kann darin bestehen, einen Schutz für das vergleichsweise fasrige Grundvlies zur Verfügung zu stellen.

Vorzugsweise ist das Absorbervlies zwischen dem Deckvlies und der Trennfolie angeordnet.

Es ist jedoch auch denkbar das Grundvlies aus einem anderen Kunststoffmaterial, beispielsweise Polyethersulfon (PES) und dann mit einem Haftvermittler, beispielsweise Polyethylen-Puder, zu versehen, um die Verbindung zwischen dem PP-Träger und dem Grundvlies zu ermöglichen bzw. zu verbessern.

Erfindungsgemäß werden das Absorbervlies und die Trennfolie beim Tiefziehen nicht nur verformt sondern auch stoffschlüssig miteinander verbunden. Dieser Stoffschluss erfolgt dadurch, dass das Absorbervlies und/oder die Trennfolie so stark erwärmt werden, dass sie sich nach oder beim Aufeinanderlegen ggf. unter der Anwendung von Druck beim anschließenden Erkalten miteinander stoffschlüssig verbinden. Dies hat den Vorteil, dass kein Klebstoff zwischen der Trennfolie und dem Absorbervlies eingesetzt werden muss.

Erfindungsgemäß wird die Trennfolie vor dem Verformen erwärmt. Vorzugsweise wird die Trennfolie dabei mindestens bis zu ihrer Plastifizierungstemperatur erwärmt.

Im folgenden wird die Erfindung anhand der Figuren 1 bis 5 erläutert. Diese Erläuterungen sind lediglich beispielhaft und schränken den allgemeinen Erfindungsgedanken nicht ein. Die Erläuterungen gelten für alle Gegenstände der vorliegenden Erfindung gleichermaßen.
- Figur 1: zeigt das Erwärmen der Trennfolie.
- Figur 2: zeigt das Anordnen des Absorbervlieses oberhalb der Trennfolie.
- Figur 3: zeigt das gemeinsame Tiefziehen der Trennfolie und des Absorbervlieses.
- Figur 4: zeigt das Stanzen des Verbundes aus Trennfolie und Absorbervlies.
- Figur 5: zeigt schematisch das erfindungsgemäße Trennmittel.

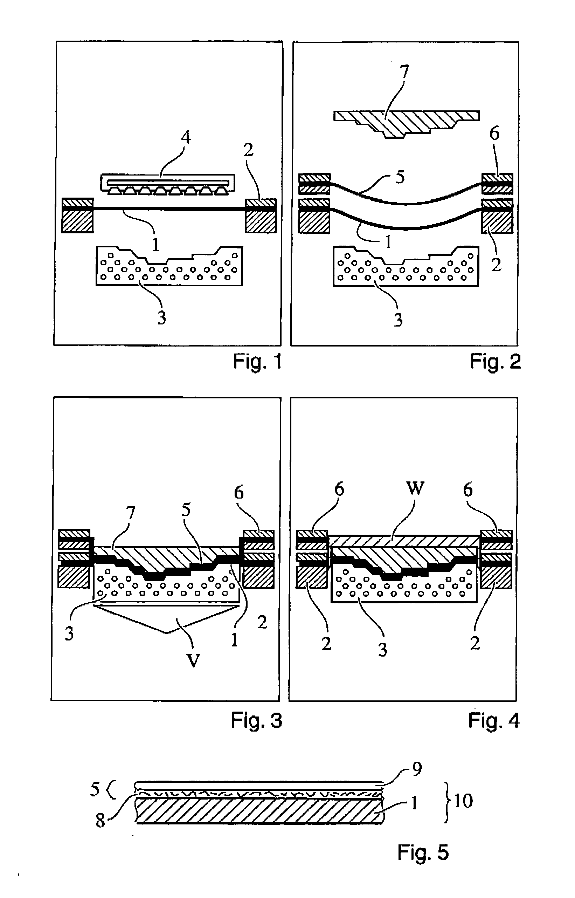

Zunächst wird, wie in Fig. 1 gezeigt, die noch ebene Trennfolie 1 in einen ersten Rahmen 2 gespannt, oberhalb eines Tiefziehwerkzeugs 3 positioniert und von oben mittels einer Heizung 4 erwärmt bis sie mindestens ihre Plastifizierungstemperatur erreicht hat. Die Erwärmung 4 der Trennfolie 1 kann mit jedem dem Fachmann geläufigen Energieeintrag, beispielsweise mittels Strahlung, Kontaktheizung, Konvektion, Ultraschall oder einer Kombination aus diesen erfolgen. Nach dem Verfahrensschritt der Heizung 4 wird ein nachfolgend näher spezifiziertes Absorbervlies 5, welches von einem weiteren Rahmen 6 gehalten wird, oberhalb der Trennfolie 1 angeordnet (Fig. 2). Mittels eines in Richtung des Tiefziehwerkzeugs 3 verfahrbaren Stempels 7, welcher beispielsweise aus einem 10 cm dicken Schaum bestehen kann, werden Absorbervlies 5 und Trennfolie 1 gemeinsam in das Tiefziehwerkzeug 3 gepresst und gleichzeitig durch Vakuum V an dessen dreidimensional geformte Formoberfläche gezogen (Fig. 3). Durch die noch vorhandene Restwärme der Trennfolie 1, gehen die Trennfolie 1 und das Absorbervlies 5 dabei einen innigen, insbesondere stoffschlüssigen, Verbund ein, der nachfolgend durch Stanzen (Werkzeug W in Fig. 4) in die gewünschte Form und mit den notwendigen Ausnehmungen versehen werden kann. Danach werden der Stempel 7 und das Tiefziehwerkzeug 3 wieder voneinander entfernt und das hergestellte Trennmittel kann entnommen werden. Alternativ wird die Trennfolie 1 aufgeheizt und dann vorgeblasen. In einem nächsten Schritt fährt ein Tiefziehstempel in die vorgeblasene Trennfolie 1 und Vakuum wird angelegt, so dass sich die Trennfolie an den Tiefziehstempel anlegt. Anschließend wird das Absorbervlies 5 mit einem Schaumstempel auf die tiefgezogene Trennfolie aufgepresst. Das erfindungsgemäße Verfahren kann sehr einfach und kostengünstig durchgeführt werden. Die Verformung der Trennfolie, des Absorbervlieses sowie deren stoffschlüssige Verbindung erfolgt in einem Verfahrensschritt, so dass das erfindungsgemäße Verfahren wesentlich einfacher durchzuführen ist als die Verfahren gemäß dem Stand der Technik.

Als Absorbervlies 5 wird vorzugsweise ein Verbund mit einem Grundvlies 8 eingesetzt, welches aus Polyesterfasern und Polypropylenfasern, vorzugsweise in einem Gewichtsverhältnis von 25:75 bis 35:55, insbesondere etwa 30:70, besteht. Auf dieses Flächengebilde wird vorzugsweise zumindest einseitig ein Deckvlies 9 aufgesetzt, welches ausschließlich Polypropylenfasern enthält und dem Verbund eine gewisse Festigkeit verleiht bzw. das sehr faserige Absorbervlies schützt. Bei einem nur zweilagigen Absorbervlies 5 ist dieses Deckvlies 9, wie in Fig. 5 dargestellt, nach dem Aufpressen auf die Trennfolie 1 vorzugsweise auf der von dieser abgewandten Flächenseite angeordnet. Die Lagen 8, 9 sind vorzugsweise stoffschlüssig, durch Siegeln oder Kleben, miteinander verbunden. Die Herstellung des Absorbervlieses erfolgt zeitlich vorzugsweise vor der Durchführung des erfindungsgemäßen Verfahren.

Vorzugsweise wird ein einlagiges Absorbervlies, dessen mindestens eine, vorzugsweise beide Oberfläche(n) kalandriert; d.h. z.B. wärmebehandelt sind, um diese zu verfestigen.

Für eine bessere Haftung können einem Vlies aus PES-Fasem PP und/oder PE-Fasern beigemischt werden.

### Bezugszeichenliste

- 1: Trennfolie
- 2: Rahmen
- 3: Tiefziehwerkzeug
- 4: Heizung, Erwärmung
- 5: Absorbervlies
- 6: Rahmen
- 7: Stempel
- 8: Grundvlies
- 9: Deckvlies
- 10: Trennmittel

- V: Vakum
- W: Stanzwerkzeug

## Patentansprüche

1. Verfahren zur Herstellung eines Trennmittels, das das Volumen zwischen Türblech und Türverkleidung in einen äußeren Nassraum und einen inneren Trockenraum unterteilt und das aus einem Verbund aus einer Trennfolie (1) und einem Absorbervlies (5) besteht wobei das Absorbervlies (5) aus einem Grundvlies (8) aus Kunststofffasern besteht, bei dem die Trennfolie (1) und das Absorbervlies (5) gemeinsam verformt, vorzugsweise tiefgezogen, werden, **dadurch gekennzeichnet. dass** die Trennfolie vor dem Verformen erwärmt wird und das Absorbervlies (5) und die Trennfolie (1) beim Tiefziehen verbunden werden, indem sie sich nach dem Erkalten miteinander stoffschlüssig verbinden.

## Claims

1. Claim 1: Method for producing a separating means dividing the volume between door panel and door trim into an external wet area and an inner dry area and consisting of a composition of a separating foil (1) and an absorber fleece (5), wherein the absorber fleece (5) consists of a base fleece (8) made of plastic fibers, wherein the separating foil (1) and the absorber fleece (5) are shaped together, preferably deep-drawn, **characterized in that** the separating foil (1) is heated prior to the shaping and **in that** the absorber fleece (5) and the separating foil (1) are connected during the deep-drawing by forming an integral connection with each other after cooling down.

## Revendications

1. Procédé de fabrication d'un moyen de séparation, qui divise le volume entre la tôle de portière et l'habillage de portière en un espace humide extérieur et un espace sec intérieur et qui se compose d'un assemblage constitué d'une feuille de séparation (1) et d'un non-tissé absorbant (5), le non-tissé absorbant (5) se composant d'un non-tissé de base (8) en fibres synthétiques, la feuille de séparation (1) et le non-tissé absorbant (5) étant déformés ensemble, de préférence par emboutissage profond, **caractérisé en ce que** la feuille de séparation est chauffée avant la déformation et le non-tissé absorbant (5) et la feuille de séparation (1) sont assemblés lors de l'emboutissage profond en sassemblant l'un à l'autre par engagement par liaison de matière après refroidissement.
